# EUROPÄISCHE PATENTANMELDUNG

(11) **EP 4 446 020 A1**
(43) Veröffentlichungstag der Anmeldung: **16.10.2024**
(21) Anmeldenummer: 23168070.3
(22) Anmeldetag: 14.04.2023
(51) Int. Cl.: B07C 5/34

(54) **SORTIERGERÄT, SORTIERVERFAHREN, SOWIE COMPUTERPROGRAMM**

(71) Anmelder: Fraunhofer-Gesellschaft zur Förderung der angewandten Forschung e.V., 80686 München (DE); WeSort.AI GmbH, 97074 Würzburg (DE)
(72) Erfinder: LAIER, Nathanael, 97074 Würzburg (DE); LAIER, Johannes, 97074 Würzburg (DE); LEISNER, Johannes, 91058 Erlangen (DE); EINEN, Alexander, 91058 Erlangen (DE)
(74) Vertreter: Pfitzner, Hannes

(57) **Zusammenfassung**

Sortiergerät (10) mit folgenden Merkmalen: Beförderungsmitteln (12) zur Beförderung eines Materialstroms (14) durch das Sortiergerät (10); einem Mehrenergieröntgensystem (20), das ausgebildet ist, den Materialstrom (14) unter Verwendung von zumindest zwei unterschiedlichen Energien zu durchstrahlen und basierend auf der Durchstrahlung Durchstrahlungsbilder zu erfassen, wobei jedes Durchstrahlungsbild je Bereich eine erste Information bezüglich einer Dichte und/oder einer Kernladungszahl sowie eine zweite strukturelle Information umfasst; einem Prozessor (28), der ausgebildet ist, unter Verwendung eines Kl-Algorithmus in einem jeweiligen der Durchstrahlungsbilder ein oder mehrere Bereiche zu erkennen, die eine zu recycelnde Komponente (16) oder eine Batterie, insbesondere eine Lithiumionenbatterie, oder eine Batteriezelle, insbesondere eine Lithiumionenbatteriezelle, aufweist; wobei die Erkennung auf Basis eines ersten Merkmals (M1), das von der ersten Information abgeleitet ist, und eines zweiten Merkmals (M2), das von der zweiten strukturellen Information abgeleitet ist, erfolgt.

## Beschreibung

Ausführungsbeispiele der vorliegenden Erfindung beziehen sich auf ein Sortiergerät bzw. eine Sortieranlage mit einem Ein- oder Mehrenergieröntgensystem sowie auf ein entsprechendes Verfahren zum Recycling und Computerprogramm. Bevorzugte Ausführungsbeispiele beziehen sich auf ein System beschreibend die Kombination aus Mehrenergieröntgentechnik und auf Deep-Learning-basierender Bildauswertung, um Litihiumionenakkumulatoren in Materialströmen zu detektieren.

Lithiumionenakkumulatoren (Lithium-Ionen-Batteries - LIB) führen in Sortieranlagen zu Bränden und enormen wirtschaftlichen Schäden. Die LIB werden in den mechanischen Aufbereitungsschritten der Sortieranlage (z. B. Sackaufreißern oder Schreddern) beschädigt und können in dessen Folge entzünden. Die durch LIB entstandene Brände sind nur schwer zu löschen, da eine hohe Energiemenge freigesetzt und bei Zersetzungsprozess der LIB Sauerstoff entsteht, der den Brand beschleunigt bzw. gelöschte Brände neu entfacht.

Die Detektion der LIB in Recyclingströmen (z. B. gelber Sack, Wertstofftonne, Papier etc.) ist jedoch alles andere als trivial. Zum einen liegt das Material oft 20-30 cm hoch auf den Förderbändern zum anderen sind die LIB oftmals in elektronischen Geräten verbaut und somit nicht frei auf dem Materialstrom zu detektieren. Dieser Umstand schließt optische Detektionssysteme (Kameras etc.) komplett aus. Mechanische Trennverfahren wie die Windsichtung können zwar schwere von leichten Objekten trennen, aber nicht mit Sicherheit LIB detektieren oder ausschleusen. Die hier anzumeldende Erfindung löst die bisher nicht durchzuführende Detektion der LIB in komplexen Materialströmen.

Das Problem wird bisher nicht an der Ursache, sondern an seinen Symptomen bekämpft. Sortieranlagen verwenden Thermographie-Kameras und Löschvorrichtungen, um Erwärmungen in den Materialströmen zu detektieren und zu löschen. Solche Systeme kosten für einzelne Sortieranlagen bis zu 5 Millionen Euro. Problematisch dabei ist zum einen die Detektionsrate der Kameras bei hohen Materialdicken auf den Transportbändern sowie die Tatsache, dass das entstehende Löschwasser gesondert gesammelt und entsorgen werden muss. Uns ist keine andere Methode bzw. kein anderes Produkt bekannt, das ähnlich zu unserem Vorschlag arbeitet. Am Ende der Sortieranlagen befinden sich oft manuelle Sortierschritte, bei denen Arbeiter:innen Gegenstände aus dem Materialstrom greifen, während diese auf einem Förderband vorbeifahren. An dieser Stelle ist es in den meisten Fällen jedoch viel zu spät, um noch auf gezündete oder gerade zündende LIB zu reagieren. Deshalb besteht der Bedarf nach einem verbesserten Ansatz.

Aufgabe der vorliegenden Erfindung ist es, ein Konzept zu schaffen, das das Recycling bei speziellen Komponenten, wie z. B. Batterien oder Lithiumionenbatterien, verbessert.

Die Aufgabe wird durch den Gegenstand der unabhängigen Patentansprüche gelöst.

Ausführungsbeispiele der vorliegenden Erfindung schaffen ein Sortiergerät mit Beförderungsmitteln, einem Ein- oder Mehrenergieröntgensystem sowie einem Prozessor. Die Beförderungsmittel sind ausgebildet, um einen Materialstrom durch das Sortiergerät zu befördern, können beispielsweise aus Förderband implementiert sein. Auf dem Förderband wird dann der zu recycelnde Materialstrom, z. B. Müll oder Müll aus dem gelben Sack, befördert. Dieser Materialstrom kann auch besonders zu recycelnde Komponenten, wie z. B. Batterien oder Akkus oder Lithiumionenbatterien, beinhalten. Das Ein- oder Mehrenergieröntgensystem ist ausgebildet, den Materialstrom unter Verwendung von zumindest eine Energie oder zwei unterschiedlichen Energien zu durchstrahlen und basierend auf der Durchstrahlung Durchstrahlungsbilder zu erfassen, wobei jedes der Durchstrahlungsbilder je Bereich eine erste Information bezüglich einer Dichte und/oder einer Kernladungszahl sowie eine zweite strukturelle Information umfasst. Die strukturelle Information kann entsprechend Ausführungsbeispielen eine Information bezüglich einer Lage der ein oder mehreren Bereiche der zu recycelnden Komponente/Elektronik/Batterie oder Batteriezelle oder bezüglich einer Lage eine Elektronik oder eine Verkabelung umfassen. Additiv oder alternativ kann die zweite strukturelle Information eine Information bezüglich einer Geometrie der ein oder mehreren Bereiche der zu recycelnden Komponente oder Batterie oder Batteriezelle umfassen. Der Prozessor ist ausgebildet, unter Verwendung eines KI-Algorithmus bzw. im Vorfeld oder in Betrieb trainierten KI-Algorithmus in einem jeweiligen der Durchstrahlungsbilder ein oder mehrere Bereiche zu erkennen, die eine Batterie, insbesondere eine Lithiumionenbatterie, oder eine Batteriezelle, insbesondere eine Lithiumionenbatteriezelle, aufweisen. Das Erkennen erfolgt auf Basis eines ersten Merkmals, das von der ersten Information abgeleitet ist, und/oder eines zweiten Merkmals, das von der zweiten strukturellen Information abgeleitet ist.

Ausführungsbeispielen der vorliegenden Erfindung liegt die Erkenntnis zugrunde, dass durch die Kombination von Mehrenergiedurchstrahlungsbilder, die es erlauben, dass durchstrahlte Materialien hinsichtlich seiner Dichte und Kernladungszahl bewertet werden, sowie strukturelle Informationen aus den Röntgenbildern (z. B. Form, Abschwächung, Information über z. B. verbaute Elektronik, ...), ein künstliches neuronales Netz (KNN) gespeist werden kann, um so eine frühzeitige Erkennung von zu recycelnden Komponenten zu ermöglichen. Beispielsweise kann das neuronale Netzwerk darauf trainiert sein, Geräte wie z. B. LIB (Lithiumionenbatterie) bzw. einzelne LIB (-Zellen) in diesen, ausgewerteten Projektionen zu erkennen. Hieraus besteht der Vorteil, dass die Bandgefahr, welche von den LIB ausgeht, bereits zu Beginn des Recyclingprozesses illuminiert werden kann. Bei hoher Detektionsgüte kann davon ausgegangen werden, dass die Brandgefahr durch LIB signifikant gesenkt wird oder fast vollständig illuminiert werden kann. Im Gegensatz zu anderen Detektionsmethoden, welche eine Mono-Lage des Materialstroms erfordern würden (wie z. B. optische Systeme), ist dies mit dem erläuterten Ansatz nicht nötig. In den meisten Sortieranlagen wäre es schwer möglich, insbesondere am Anfang des Materialstroms, eine Mono-Lage im Materialstrom zu erzeugen. Ausführungsbeispiele der Erfindung schaffen somit erhöhte Brandsicherheit, wobei die Kosten für die Röntgendetektionssysteme deutlich niedriger wären als aktuelle Anlagen zur Branddetektion und Brandlöschung.

Entsprechend Ausführungsbeispielen ist der Prozessor ausgebildet, ein oder mehrere Kandidatenbereiche für die zu recycelnde Komponente oder für die Batterie oder die Batteriezelle anhand des ersten Merkmals zu identifizieren und anhand des zweiten Merkmals die Kandidatenbereiche als die ein oder mehreren Bereiche zu identifizieren. Entsprechend einem weiteren Ausführungsbeispiel wäre es denkbar, dass die ein oder mehreren Kandidatenbereiche für die zu recycelnden Komponente, die Batterie oder die Batteriezelle anhand des zweiten Merkmals identifiziert werden und anhand des ersten Merkmals die Kandidatenbereiche als die ein oder mehreren Bereiche identifiziert werden. Entsprechend einer weiteren Variante kann der Prozessor auch ausgebildet sein, die ein oder mehreren Bereiche auf Basis einer Kombination des ersten und des zweiten Merkmals zu identifizieren.

Entsprechend einem Ausführungsbeispiel ist der Prozessor ausgebildet, eine Position der ein oder mehreren Bereiche und/oder eine Information über die Position oder relativen Position im Materialstrom der ein oder mehreren Bereiche zu ermitteln und diese beispielsweise an die Sortieranlage weiterzugeben. Das Sortiergerät kann entsprechend Ausführungsbeispielen eine Steuerung aufweisen, die ausgebildet ist, die Sortiermittel zu steuern. Entsprechend bevorzugten Ausführungsbeispielen erfolgt das Steuern der Sortiermittel derart, dass diese aktiviert werden, wenn der Prozessor die ein oder mehreren Bereiche identifiziert hat. Entsprechend einer weiter bevorzugten Variante ist die Steuerung ausgebildet, die Sortiermittel zu steuern und anhand der vormals ermittelten Position oder der ermittelten relativen Position die zu recycelnde Komponente/die Batterie/die Batteriezelle mittels der Sortiermittel auszusortieren. Hierbei können die Sortiermittel anhand der Position der ein oder mehreren Bereiche und/oder eine Information über die Position oder relative Position im Materialstrom der ein oder mehreren Bereiche positioniert werden.

Entsprechend Ausführungsbeispielen weisen die Sortiermittel eine Pneumatik, ein Pneumatikschnellschaltventil, eine angetriebene Klappe, ein Reversierband oder ein Robotergreifarm auf.

Entsprechend Ausführungsbeispielen ist das Röntgensystem ausgebildet, die zweite strukturelle Information dadurch zu ermitteln, dass ein homogener Bereich bzw. quasi homogener Bereich zuordenbar zu einer zu recycelnden Komponente/Batterie oder Batteriezelle in Bezug auf seine Geometrie analysiert wird. Hierbei wird die Geometrie erkannt. Zylinderförmige Geometrien sind typisch für Batteriezellen. Auch wäre es denkbar, dass bei der Erkennung auch Zusatzkomponenten, wie z. B. eine Verkabelung oder eine Elektronik, erkannt wird. Verkabelungen weisen ein hohes Aspektverhältnis auf und haben häufig eine zumindest teilweise unregelmäßige Biegung. Eine Elektronik ist durch einen Träger, wie z. B. eine Leiterplatte oder elektrische Komponenten, wie z. B. Kondensatoren, ICs und/oder Widerstände gekennzeichnet. Diese Zusatzkomponenten wie die Verkabelung oder die Elektronik in Kombination mit runden, zylinderförmigen, eckigen Zellen kann die zweite strukturelle Information darstellen. Im einfachsten Fall kann die zweite strukturelle Information eine Information über das eingeschlossene Volumen oder die Geometrie zuordenbar zu einer zu recycelnden Komponente aufweisen. Hierbei kann entsprechend Ausführungsbeispielen eine Musterdetektion erfolgen, die auf mehrere exemplarische/ähnliche Muster in einer Datenbank zugreift und Ähnlichkeiten zu typischen Mustern erkennt. Diese Datenbank ist entsprechend bevorzugten Ausführungsbeispielen durch Kl trainiert. Mittels Benutzereingabe werden relevante Objekte gelabelt und die entsprechenden Trainingsdaten dem KI-Algorithmus zugeführt, um dieselben zu trainieren.

Entsprechend Ausführungsbeispielen kann das Training auch in Kombination mit der ersten Information erfolgen, d. h. also, dass gelabelte Trainingsdaten umfassend die erste und die zweite strukturelle Information enthalten sind. Diese werden dann vom KI-Algorithmus hinsichtlich erster und zweiter Merkmale untersucht. Bevorzugterweise werden große Mengen von Trainingsdaten verwendet, um so im Vorfeld oder im laufenden Betrieb den Kl-Algorithmus zu trainieren. Entsprechend Ausführungsbeispielen wäre es auch denkbar, dass die großen Mengen an Daten im laufenden Betrieb gesammelt und im Nachhinein gelabelt werden.

Entsprechend Ausführungsbeispielen ist das Röntgensystem im Materialfluss vor den Sortiermitteln angeordnet. Bezüglich der Position sei angemerkt, dass die Position und die relative Position im Materialstrom entlang der Bewegung des Materialstroms, d. h. also abhängig von der Bewegungsrichtung und Bewegungsgeschwindigkeit des Materialstroms, berechnet und weitergegeben wird. Der Materialstrom kann entsprechend Ausführungsbeispielen mehrlagig sein, wobei die zu recycelnde Komponente/Batterie/Batteriezelle nicht zwingend auf der obersten Unterlage vorliegen muss, sondern auch zwischen zwei Lagen angeordnet sein kann.

Ein weiteres Ausführungsbeispiel schafft ein Verfahren zum Recyceln mit folgenden Schritten:
Befördern des Materialstroms durch ein Sortiergerät mittels Beförderungsmitteln;
Durchstrahlen des Materialstroms mit zumindest ein oder zwei unterschiedlichen Energien und Erfassen basierend auf der Durchstrahlung von Durchstrahlungsbildern, wobei jedes Durchstrahlungsbild je Bereich eine erste Information bezüglich einer Dichte und/oder einer Kernladungszahl sowie eine zweite strukturelle Information umfasst;
Erkennen unter Verwendung eines KI-Algorithmus in einem jeweiligen der Durchstrahlungsbilder eines oder mehrerer Bereiche, die eine zu recycelnde Komponente oder eine Batterie, insbesondere eine Lithiumionenbatterie, oder eine Batteriezelle, wie zum Beispiel eine Lithiumionenbatteriezelle, aufweist,
wobei die Erkennung auf Basis eines ersten Merkmals (M1), das von der ersten Information abgeleitet ist, und/oder eines zweiten Merkmals (M2), das von der zweiten strukturellen Information abgeleitet ist, erfolgt.

Entsprechend Ausführungsbeispielen kann das Verfahren computerimplementiert sein. Ausführungsbeispiele der vorliegenden Erfindung werden anhand der beiliegenden Zeichnungen erläutert. Es zeigen:
- Fig. 1: eine schematische Darstellung einer Sortieranlage gemäß einem Basisausführungsbeispiel;
- Fig. 2: eine schematische Darstellung eines Flussdiagramms zur Illustration des Recyclingverfahrens gemäß Ausführungsbeispielen;
- Fig. 3: eine schematische Darstellung einer zu recycelnden Komponente (Batterie), um erste und zweite Merkmale bzw. erste und zweite (strukturelle) Informationen zu erläutern, die bei Ausführungsbeispielen zur Anwendung kommen.

Bevor nachfolgend Ausführungsbeispiele der vorliegenden Erfindung anhand der beiliegenden Zeichnungen erläutert werden, sei darauf hingewiesen, dass gleichwirkende Elemente und Strukturen mit den gleichen Bezugszeichen versehen sind, so dass die Beschreibung derer aufeinander anwendbar bzw. austauschbar ist.

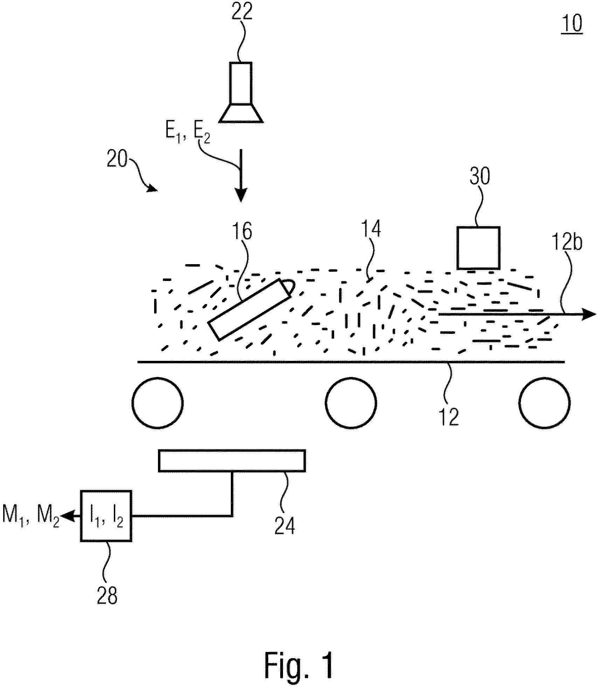

Fig. 1 zeigt eine Sortieranlage 10 (allgemein Sortiergerät) mit einem Beförderungsmittel 12 sowie einem Röntgensystem, hierMehrenergieröntgensystem 20. Dieses umfasst beispielsweise eine Strahlenquelle 22 sowie einen Strahlendetektor 24. Darüber hinaus umfasst die Sortieranlage 10 einen Prozessor 28. Dieser ist beispielsweise mit dem /Mehr-energie-)Röntgensystem informatorisch gekoppelt und erhält Durchstrahlungsbilder von dem Röntgendetektor 24. Entsprechend optionalen Ausführungsbeispielen kann die Sortieranlage 10 auch noch Sortiermittel 30 aufweisen.

Die Beförderungsmittel 12, die hier beispielsweise als Förderband ausgeführt sind, transportieren einen Materialstrom 14 entlang einer Bewegungsrichtung 12b. In dem Materialstrom 14 kann beispielsweise ein zu detektierendes Objekt, wie z. B. eine Batterie oder Lithiumionenbatterie 16, enthalten sein. Die Sortieranlage 10 ist ausgebildet, das zu detektierende Objekt 16 zu identifizieren und entsprechend optionalen Ausführungsbeispielen mittels den Sortiermitteln 30 auszusortieren. Nachfolgend wird die Identifikation des Objekts 16 gemäß dem Basisausführungsbeispiel erläutert.

Das Mehrenergieröntgensystem 20 durchstrahlt mittels der Durchstrahlungsquelle 22 den Materialstrom 14 und damit auch das zu recycelnde Objekt 16. Hierzu werden beispielsweise zwei oder mehr Durchstrahlungsenergien E1 und E2 verwendet, die dann nach Durchstrahlung des Materialstroms 14 bzw. des zu recycelnden Objekts 16 vom Röntgendetektor 24 detektiert werden. Der Röntgendetektor 24 gibt die Durchstrahlungsbilder zugeordnet zu den Energien E1 und E2 z. B. an den Prozessor aus. Die Durchstrahlungsbilder können entsprechend einer bevorzugten Variante als Mehrenergiedurchstrahlungsbildbzw. allgemein als Durchstrahlungsbild vorliegen. Durchstrahlungsbilder haben den Vorteil, dass Information, wie z. B. eine Dichte des zu durchstrahlenden Objekts und damit auch des Materialstroms 14 bzw. des zu recycelnden Objekts 16 sowie auch eine Kernladungszahl des Materialstroms 14 bzw. des zu recycelnden Objekts 16, bestimmbar ist. Die Dichte und/oder die Kernladungszahl wird als erste Information betrachtet. An dieser Stelle sei angemerkt, dass Batterien, wie z. B. Lithiumionenbatterien (vgl. zu recycelndes Objekt 16), häufig eine bestimmte Dichte und/oder eine bestimmte Kernladungszahl aufgrund ihrer Materialität aufweisen. Diese erste Information I1 wird durch den Prozessor 28 bestimmt bzw. aus dem jeweiligen Durchstrahlungsbild entnommen. Da der gesamte Materialstrom 14 inklusive dem zu recycelnden Objekt 16 durchstrahlt werden, kann jedes Durchstrahlungsbild diese Information I1 zugeordnet zu unterschiedlichen Bereichen, z. B. zugeordnet zu unterschiedlichen Pixeln oder zugeordnet zu unterschiedlich geclusterten Pixeln, entnommen werden. Neben der Bestimmung von I1 ist der Prozessor 28 auch zur Bestimmung von I2 ausgebildet. I2 stellt eine strukturelle Information dar, wie z. B. die Geometrie eines Objekts 16 in dem Materialstrom 14 oder die Lage oder Position. Hierzu ist der Prozessor 28 ausgebildet, in jedem Durchstrahlungsbild einen zusammenhängenden Bereich, z. B. bestehend aus mehreren Pixeln, zu erkennen/zu markieren und diesen Bereich hinsichtlich Position, Lage, Größe, Geometrie zu analysieren. Beispielsweise kann die Geometrie des zu recycelnden Objekts 16 bzw. der Batterie erkannt werden. Batterien haben häufig eine Zylinderform. Der Prozessor 28 kann solche typischen Geometrien erkennen und markieren.

Aus der Information I1 bezüglich der Dichte bzw. Kernladungszahl wird ein erstes Merkmal M1 abgeleitet, während aus der Information I2 bezüglich der Geometrie oder allgemein der strukturellen Information ein zweites Merkmal M2 abgeleitet wird. Diese zwei Merkmale in Kombination lassen einen Rückschluss auf das Objekt 16, oder im speziellen auf das Vorhandensein oder Nichtvorhandensein eines gesuchten Objektes 16, wie z. B. einer Batterie, einer Lithiumionenbatterie oder Batteriezelle bzw. Lithiumionenbatteriezelle, zu. Die zwei Merkmale M1, M2 können jeweils unterschiedliche Ausprägungen haben, wobei die Kombination der Ausprägung entsprechend Ausführungsbeispielen das Erkennen ermöglicht. Die Erkennung erfolgt entsprechend einem KI-Algorithmus bzw. einem trainierten Algorithmus. Der Algorithmus ist auf dem Prozessor 28 implementiert und mittels Lerndaten entweder im Vorfeld oder im laufenden Betrieb trainiert. Insofern kann entsprechend Ausführungsbeispielen der Prozessor 28 Zugriff auf eine Datenbank, z. B. eine in einem internen Speicher oder einem externen Speicher (Server) gespeicherte Datenbank, haben. Eine externe Datenbank bietet den Vorteil, dass die große Datenbasis für das Training des Kl-Algorithmus durch mehrere zusammengeschaltete KI-Algorithmen bzw. ähnliche Sortieranlagen vergrößert werden kann.

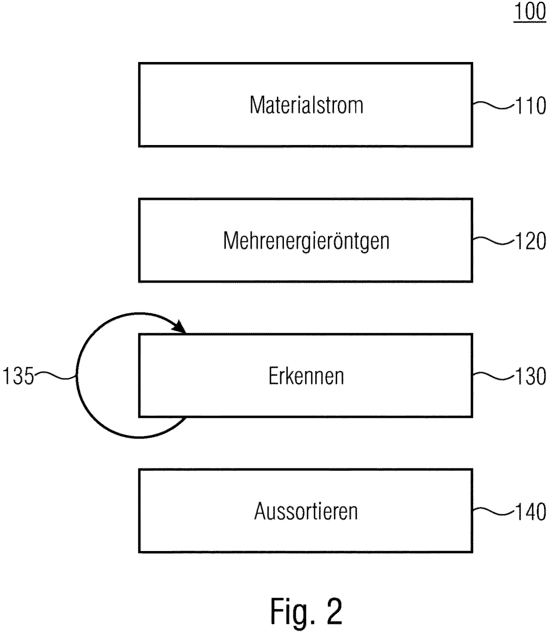

Nachfolgend wird Bezug nehmend auf Fig. 2 das entsprechende Verfahren zum Steuern der Sortieranlage erläutert, wobei auch auf optionale Schritte eingegangen wird.

Das Verfahren 100 umfasst die drei Basisschritte 110, 120 und 130. Danach kann ein optionaler Schritt 140 vorgesehen sein. Bei dem Schritt 140 wird der Materialstrom 14, der z. B. den Lithiumionenakku 16 umfasst, durch die Sortieranlage 10 mittels dem Beförderungsmittel 12 befördert.

Im nachfolgenden Schritt 120 erfolgt eine Durchstrahlung des Materialstroms und zwar mit zwei unterschiedlichen Energien, um die Durchstrahlungsbilder zu erhalten. Diese zwei Schritte 110 und 120 werden entsprechend Ausführungsbeispielen kontinuierlich wiederholt, nämlich für immer neue Materialstromabschnitte, so dass immer neue Mehrenergieröntgenbilder von weiteren bzw. verschobenen Abschnitten genommen werden. Im nachfolgenden Schritt 130 kann entweder die eine Mehrenergieröntgenaufnahme oder die Mehrzahl an Mehrenergieröntgenaufnahmen zugehörig zu mehreren Samples analysiert werden. Dieser Schritt ist mit dem Bezugszeichen 130 versehen und umfasst das Erkennen unter Verwendung eines KI-Algorithmus von ein oder mehreren Bereichen, die eine zu recycelnde Komponente, wie z. B. eine Batterie, Lithiumionenbatterie oder Batteriezelle/Lithiumionenbatteriezelle, aufweisen. Das Erkennen 130 erfolgt, wie oben bereits erläutert, auf Basis des ersten oder zweiten Merkmals M1/M2. Hierbei kann das erste und zweite Merkmal in Kombination verwendet werden. Die Kombination heißt, dass beide Merkmale gleichwertig sind, d. h. gemeinsam ausgewertet werden. Alternativ wäre auch eine Auswertung nach dem ersten Merkmal und eine Bestätigung durch das zweite Merkmal oder eine Auswertung nach dem zweiten Merkmal und eine Bestätigung durch das erste Merkmal denkbar. Entsprechend weiteren Ausführungsbeispielen können natürlich auch weitere Merkmale ergänzt werden.

Entsprechend Ausführungsbeispielen wird jedes Merkmal durch ein oder mehrere Parameter charakterisiert. Beim ersten Merkmal wäre das die Kernladungszahl bzw. die Dichte. Lithiumionenbatterien haben eine spezifische Kernladungszahl bzw. range, in welcher sich die Kernladungszahl bewegt. Diese kann beispielsweise sein: z.B. 3 oder zwischen 1 und 30. Ebenso kann die Dichte auch exemplarisch im Bereich von 0,1 bis 5g/cm3 oder 0,5 g/cm3 bis 12 g/cm3 sein.

Für das zweite Merkmal M2 gibt es auch Parameter, anhand dieser dieses beschrieben werden kann. Beispielsweise kann es einen Geometrieparameter umfassen, der die Form charakterisiert oder auch Geometrieparameter, wie z. B. einen Parameter, der das Volumen charakterisiert. Dieses zweite strukturelle Merkmal M2 kann auch eine Information dahingehend umfassen, ob die zu recycelnde Komponente mit weiteren Komponenten, wie z. B. einer Elektronik, verbunden ist. Sowohl beim ersten als auch beim zweiten Merkmal M1/M2 ist jeweils eine Kombination aus Untermerkmalen (beim ersten Merkmal Kernladungszahl + Dichte, beim zweiten Merkmal beispielsweise Volumen + Formfaktor und/oder + weitere Komponenten erkannt) möglich. Anhand der Merkmalskombination oder Merkmalskombination der Untermerkmale erfolgt dann das Erkennen.

Erkannte zu recycelnde Objekte, wie z. B. Lithiumionenbatterien, werden markiert, d. h. also, dass Information ausgegeben wird, dahingehend, dass mit einer hohen Wahrscheinlichkeit ein entsprechendes zu recycelndes Merkmal, wie z. B. eine Lithiumionenbatterie, vorliegt. Auch kann zusätzlich die Position des Objekts 16 im Materialstrom 14 mitangegeben werden, wobei ausgehend von der Materialstrombewegung 12b die Position auch eine Information bezüglich der Geschwindigkeit, Bewegungsrichtung, etc. umfassen kann.

In dem nächsten optionalen Schritt 140 wird diese Information verwendet. In dem Schritt 140 wird das erkannte Objekt 16 entsprechend aussortiert, d. h. vom restlichen Materialstrom 14 getrennt, z. B. durch eine pneumatische Vorrichtung oder einen Greifarm. In Fig. 1 sind diese Sortiermittel mit dem Bezugszeichen 30 versehen.

Zusammenfassend heißt es also, dass das System 10 aus Fig. 1 Mehrenergieröntgentechnik 20 nutzt, um einen Abfallstrom 14 auf z. B. einem Förderband 12 zu durchstrahlen und somit selbst bei hoher Materialdicke und in unterschiedlichen Geräten LIBs 16 im Materialstrom 14 zu detektieren. Um die Identifikation der LIBs 16 (freiliegend oder innerhalb von Geräten) durchzuführen, wird ein Maschinen-Learning (ML)-basierter Ansatz verwendet. Dieser nutzt das zumindest erste Merkmal M1 und zweite strukturelle Merkmal M2 bzw. die entsprechenden Untermerkmale hierzu. Dazu ist der Algorithmus bzw. wird der Algorithmus mit einer Vielzahl an Lerndaten trainiert. Dieser Schritt ist optional und mit dem Bezugszeichen 135 in Fig. 2 versehen. Beim Trainieren werden eine Vielzahl von Mehrenergieröntgenaufnahmen zugeordnet zu unterschiedlichen Materialströmen bzw. unterschiedlichen Materialströmen mit zu detektierenden Objekten, wie z. B. LIBs, bereitgestellt und im Vorfeld oder im Nachgang gelabelt.

Somit ist eine Klassifizierung der einzelnen unterschiedlichen Materialien im Materialstrom 14 und damit auch eine Erkennung der LIBs 16 bzw. allgemein der zu detektierenden Objekte 16 anhand der Merkmale M1 und M2 möglich. Das erste Merkmal M1 wird auf Basis der ersten Information bestimmt, während das Merkmal M2 auf Basis der zweiten strukturellen Information bestimmt wird. Wie bereits oben erwähnt, können bei jedem Merkmal M1 und M2 auch mehrere Informationen verwendet werden. Auch wäre es denkbar, dass jedes Merkmal in Untermerkmalen aufgegliedert wird.

Entsprechend Ausführungsbeispielen klassifiziert der ML-Prozessor bzw. mit ML trainierte Prozessor 28 die gefundenen Geräte 16 in Klassen (wie z. B. Powerbanks, Handys, etc.) entsprechend weiteren Ausführungsbeispielen. Das heißt also, dass auch eine Differenzierung zwischen einzelnen so detektierten Objekten 16 erfolgen kann. Insofern kann der Algorithmus auch derart ausgelegt sein, dass unterschiedliche Objekte erkannt und auseinandergehalten werden. Das erfolgt ebenso durch die Verbindung der Information aus der Mehrenergieröntgenaufnahme (Röntgendaten basierend auf Dichte und Kernladungszahl) mit der der Objekterkennung (Form, Abschwächung, Information über z. B. verbaute Elektronik, etc.).

An dieser Stelle sei angemerkt, dass entsprechend Ausführungsbeispielen die Mehrenergieröntgenaufnahmetechnik möglichst weit vorne in Materialflussrichtung gesehen (vgl. 12b) in der Sortieranlage verbaut ist, um möglichst frühzeitig gefährliche Elemente, wie z. B. LIBs, zu erkennen.

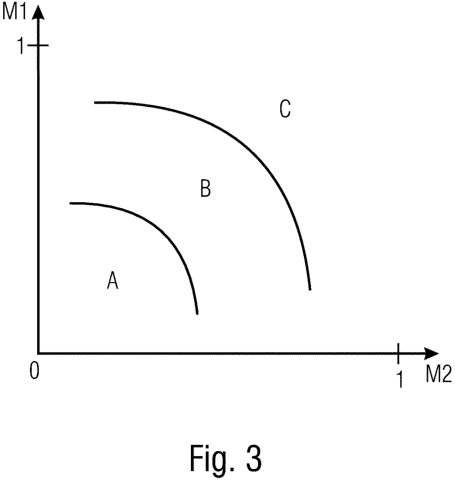

Bezug nehmend auf Fig. 3 werden nun Merkmalskombinationen anhand eines Diagramms erläutert. Fig. 3 zeigt ein zweidimensionales Diagramm mit den Merkmalen M1 und M2. Umso höher der Wert ist, umso höher ist der Erfüllungsgrad des jeweiligen Merkmals. Beispielsweise deutet ein hoher M1-Wert darauf hin, dass die Kernladungszahl und/oder die Dichte nahe einer typischen Dichte/typischen Kernladungszahl für zu suchende Objekte, wie z. B. LIBs, ist. Mit dem Merkmal M2 wird die Kombination aus unterschiedlichen Formfaktoren bestimmt. Beispielsweise gibt ein hoher M2-Wert an, dass die Größe sich im Bereich des entsprechenden gesuchten Wertes befindet, d. h. beispielsweise, dass das erkannte Objekt ein entsprechendes Volumen hat, das einem Volumen eines gesuchten Objekts, wie z. B. einem LIB, entspricht, also nicht signifikant größer oder signifikant kleiner ist. Das Diagramm ist in drei Teile untergliedert, wobei der Diagrammteil A angibt, dass höchstwahrscheinlich keine LIB in dem untersuchten Bereich vorliegt, und der Diagrammteil B eine mittlere Wahrscheinlichkeit angibt. Im Bereich C ist die Wahrscheinlichkeit, dass ein LIB in dem untersuchten Bereich gefunden wurde, hoch. Entsprechend weiteren Ausführungsbeispielen können die einzelnen Merkmale, wie z. B. das zweite strukturelle Merkmal M2, auch aufgegliedert sein, so dass sich dann beispielsweise ein mehrdimensionaler Merkmalsraum, z. B. dreidimensional, etc. ergibt.

Wie bereits oben erwähnt, wird bei dem Merkmal immer ein Vergleich mit einem typischen "Zielwert" gemacht, d. h. also, dass die Wahrscheinlichkeit, dass ein entsprechend gesuchtes Objekt, wie z. B. eine LIB, vorliegt, dann gegeben ist, wenn die Kernladungszahl oder Dichte extrem hoch ist.

An dieser Stelle sei angemerkt, dass entsprechend Ausführungsbeispielen die Mehrenergieröntgenaufnahme nicht nur durch eine eindimensionale Durchleuchtung, d. h. also nicht nur in einer Durchleuchtungsrichtung, sondern auch durch eine mehrdimensionale Durchleuchtungsrichtung, entsprechend einem CT, realisiert sein kann.

Nachfolgend wird ein bevorzugtes Ausführungsbeispiel in Gänze erläutert:
An geeigneter Stelle in der Sortieranlage (möglichst frühzeitig) wird ein Mehrenergieröntgensystem installiert. Dieses durchstrahlt den Materialstrom auf dem Förderband und generiert Durchstrahlungsbilder. Diese Durchstrahlungsbilder erlauben es, das durchstrahlte Material hinsichtlich seiner Dichte und Kernladungszahl zu bewerten sowie strukturelle Informationen aus den Röntgenbildern (Form, Abschwächung, Information über z. B. verbaute Elektronik, ...) in ein künstliches neuronales Netzwerk (KNN) zu speisen. Dieses neuronale Netzwerk ist darauf trainiert, Geräte mit LIB bzw. einzelne LIB in diesen, ausgewerteten Projektionen zu identifizieren. Somit können die LIB sehr früh im Recyclingprozess detektiert, gefunden und aus dem Materialstrom ausgebracht werden. Zur Ausbringung können dabei unterschiedliche Methoden (z. B. Pneumatik-Schnellschaltventile, angetriebene Klappen, Reversierband, (Robotik)-Greifer etc.) verwendet werden.

Ausführungsbeispiele der vorliegenden Erfindung werden vor allem in der Recyclingindustrie verwendet. Dabei können verschiedene Materialströme in der Branche adressiert werden. Darunter fallen z. B. der Materialstrom der Leichtverpackung (LVP), Elektroaltgeräte (WEEE), Industrie- oder Siedlungsabfälle. Zudem wäre es möglich, das Patent auch auf andere anliegende Anwendungsfälle wie z. B. die Detektion von LIB in Papiermüll zu transponieren. Dies betrifft nicht nur Sortieranlagen, sondern z. B. auch Aufbereitungsanlagen für Papier, Zwischenlager oder Anlagen zur Ballenpressung.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eine Hardware-Apparats), wie zum Beispiel einen Mikroprozessor, einen programmierbaren Computer oder eine elektronische Schaltung. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Sortiergerät (10) mit folgenden Merkmalen:
Beförderungsmitteln (12) zur Beförderung eines Materialstroms (14) durch das Sortiergerät (10);
einem Ein- oder Mehrenergieröntgensystem (20), das ausgebildet ist, den Materialstrom (14) unter Verwendung von zumindest einer Energie oder zumindest zwei unterschiedlichen Energien zu durchstrahlen und basierend auf der Durchstrahlung Durchstrahlungsbilder zu erfassen, wobei jedes Durchstrahlungsbild je Bereich eine erste Information bezüglich einer Dichte und/oder einer Kernladungszahl sowie eine zweite strukturelle Information umfasst;
einem Prozessor (28), der ausgebildet ist, unter Verwendung eines KI-Algorithmus in einem jeweiligen der Durchstrahlungsbilder ein oder mehrere Bereiche zu erkennen, die eine zu recycelnde Komponente (16) oder Elektronik oder eine Batterie, insbesondere eine Lithiumionenbatterie, oder eine Batteriezelle, insbesondere eine Lithiumionenbatteriezelle, aufweist;
wobei die Erkennung auf Basis eines ersten Merkmals (M1), das von der ersten Information abgeleitet ist, und/oder eines zweiten Merkmals (M2), das von der zweiten strukturellen Information abgeleitet ist, erfolgt.

2. Sortiergerät (10) gemäß Anspruch 1, wobei die zweite strukturelle Information eine Information bezüglich einer Lage der ein oder mehreren Bereiche der zu recycelnde Komponente (16) oder der Batterie oder der Batteriezelle bezüglich einer Lage einer Elektronik oder einer Verkabelung umfasst; und/oder
wobei die zweite strukturelle Information eine Information bezüglich einer Geometrie der ein oder mehreren Bereiche der zu recycelnde Komponente (16) oder der Batterie oder der Batteriezelle umfasst.

3. Sortiergerät (10) gemäß einem der vorherigen Ansprüche, wobei der Prozessor (28) ausgebildet ist, ein oder mehrere Kandidatenbereiche für die zu recycelnde Komponente (16) oder die Batterie oder die Batteriezelle anhand des ersten Merkmals (M1) zu identifizieren und anhand des zweiten Merkmals (M2) die Kandidatenbereiche als die ein oder mehreren Bereiche zu identifizieren.

4. Sortiergerät (10), wobei der Prozessor (28) ausgebildet ist, ein oder mehrere Kandidatenbereiche für die zu recycelnde Komponente (16) oder die Batterie oder die Batteriezelle anhand des zweiten Merkmals (M2) zu identifizieren und anhand des ersten Merkmals (M1) die Kandidatenbereich als die ein oder mehreren Bereiche zu identifizieren.

5. Sortiergerät (10) gemäß einem der vorherigen Ansprüche, wobei der Prozessor (28) ausgebildet ist, die ein oder mehreren Bereiche auf Basis einer Kombination des ersten und des zweiten Merkmals (M2) zu identifizieren.

6. Sortiergerät (10) gemäß einem der vorherigen Ansprüche, wobei der Prozessor (28) ausgebildet ist, eine Position der ein oder mehreren Bereiche und/oder eine Information über die Position oder relative Position im Materialstrom (14) der ein oder mehreren Bereiche zu ermitteln.

7. Sortiergerät (10) gemäß einem der vorherigen Ansprüche, die ferner eine Steuerung aufweist, die ausgebildet ist, Sortiermittel zu steuern.

8. Sortiergerät (10) gemäß Anspruch 7, wobei die Steuerung ausgebildet ist, die Sortiermittel zu aktivieren, wenn der Prozessor (28) die ein oder mehreren Bereiche identifiziert hat.

9. Sortiergerät (10) gemäß Anspruch 6, die ferner eine Steuerung aufweist, die ausgebildet ist, Sortiermittel zu steuern und anhand der ermittelten Position oder ermittelten relativen Position die zu recycelnde Komponente (16) oder die Batterie oder die Batteriezelle mittels der Sortiermittel auszusortieren und/oder die Sortiermittel anhand einer Position der ein oder mehreren Bereiche und/oder einer Information über die Position oder relative Position im Materialstrom (14) der ein oder mehreren Bereiche zu positionieren.

10. Sortiergerät (10) gemäß einem der Ansprüche 7, 8 und 9, wobei die Sortiermittel eine Pneumatik, ein Pneumatikschnellschaltventil, eine angetriebene Klappe, ein Reversierband und/oder einen Robotergreifarm aufweisen.

11. Sortiergerät (10) gemäß einem der Ansprüche 7, 8, 9 oder 10, wobei das Ein- oder Mehrenergieröntgensystem (20) in Materialflussrichtung vor den Sortiermitteln angeordnet ist.

12. Sortiergerät (10) gemäß einem der Ansprüche 6 bis 11, wobei der Prozessor (28) ausgebildet ist, die Position oder relative Position im Materialstrom (14) entlang der Bewegung des Materialstroms (14) zu berechnen.

13. Sortiergerät (10) gemäß einem der vorherigen Ansprüche, wobei der Materialstrom (14) mehrlagig ist; und/oder wobei die zu recycelnde Komponente (16) oder die Batterie oder die Batteriezelle zwischen zwei Lagen angeordnet ist.

14. Verfahren (100) zum Recycling mit folgenden Schritten:
Befördern (110) des Materialstroms (14) durch ein Sortiergerät (10) mittels Beförderungsmitteln (12);
Durchstrahlen (120) des Materialstroms (14) mit zumindest zwei unterschiedlichen Energien und Erfassen basierend auf der Durchstrahlung von Durchstrahlungsbildern, wobei jedes Durchstrahlungsbild je Bereich eine erste Information bezüglich einer Dichte und/oder einer Kernladungszahl sowie eine zweite strukturelle Information umfasst;
Erkennen (130) unter Verwendung eines KI-Algorithmus in einem jeweiligen der Durchstrahlungsbilder ein oder mehrerer Bereiche, die eine zu recycelnde Komponente (16) oder Elektronik oder eine Batterie, insbesondere eine Lithiumionenbatterie, oder eine Batteriezelle, wie zum Beispiel eine Lithiumionenbatteriezelle, aufweisen,
wobei die Erkennung auf Basis eines ersten Merkmals (M1), das von der ersten Information abgeleitet ist, und/oder eines zweiten Merkmals (M2), das von der zweiten strukturellen Information abgeleitet ist, erfolgt.

15. Computerprogramm zur Durchführung der Verfahrensschritte gemäß dem Verfahren nach Anspruch 14.
